# EUROPÄISCHE PATENTANMELDUNG

(11) **EP 2 003 606 A1**
(43) Veröffentlichungstag der Anmeldung: **17.12.2008**
(21) Anmeldenummer: 08008427.0
(22) Anmeldetag: 05.05.2008
(51) Int. Cl.: G06Q 30/00

(54) **Vorrichtung zum Aufgeben von Bestellungen**

(30) Priorität: 12.06.2007 DE 202007008387 U
(71) Anmelder: Deibel, Ralf, 66130 Saarbrücken (DE)
(72) Erfinder: Deibel, Ralf, 66130 Saarbrücken (DE)
(74) Vertreter: Vièl, Christof

(57) **Zusammenfassung**

Die Erfindung betrifft eine Vorrichtung zum Aufgeben von Bestellungen durch Kunden, insbesondere von Speisen und Getränken am Tische eines Restaurants.

Das Ziel dieser Erfindung liegt darin, die Aufnahme von Bestellungen im Restaurant zu beschleunigen und die Fehlerquote zu mindern. Es wurden Vorrichtungen zum Bestellen von Speisen und Getränken geschaffen, die das direkte Bestellen des Gastes am Tisch ermöglichen, ohne das Beisein eines Kellners zu erfordern.

## Beschreibung

Die Erfindung betrifft eine Vorrichtung zum Aufgeben von Bestellungen durch Kunden, insbesondere von Speisen und Getränken am Tisch eines Restaurants, mit Mitteln zum Übertragen der Bestellung an den Servicebereich.

In Restaurants stellt sich häufig das Problem, daß vor einer Bestellung zunächst die Speisekarte angefordert werden muß, was aufgrund der Vielzahl von Gästen, die durch einen Kellner bedient werden, eine gewisse Zeit in Anspruch nehmen kann. Anschließend muß erneut der Kellner an den Tisch kommen, um die Bestellung dann aufzunehmen, was wiederum einige Zeit dauern kann. Erst wenn der Kellner die Bestellung dann in der Küche abgegeben hat, kann die Zubereitung der Speisen und das Zusammenstellen der Getränke beginnen. Darüber hinaus kommt es regelmäßig zu Fehlbestellungen aufgrund von Mißverständnissen und Übertragungsfehlern.

Um die Aufnahme von Bestellungen in Restaurants zu beschleunigen und die Fehlerquote zu verringern, wurden Vorrichtungen zum Bestellen von Speisen und Getränken geschaffen, die dem Gast ein Bestellen direkt am Tisch ohne Mitwirken eines Kellners ermöglichen.

Es sind Vorrichtungen bekannt, die mittels eines Computers über Netzwerk- und/oder Funktechnik sowie einen Bildschirm und eventuell eine Tastatur Bestellungen direkt am Tisch aufgegeben werden können. Diese Vorrichtungen benötigen jedoch eine erhebliche Stellfläche für den Bildschirm und gegebenenfalls die Tastatur sowie eventuell eine Speisekarte zum Auswählen der zu bestellenden Speisen. Häufig sind jedoch die Platzverhältnisse in Restaurants relativ beengt, so daß gerade ausreichend Platz für die Speisen und Getränke auf dem Tisch zur Verfügung steht.

Darüber hinaus benötigen diese Vorrichtungen aufgrund des relativ hohen Stromverbrauchs des Bildschirms einen Stromanschluß, der in vielen Fällen (Tische, die nicht an der Wand und in Nähe einer Steckdose stehen, Bewirtung im Freien) zumindest nicht für alle Tische zur Verfügung steht.

Ein weiterer Nachteil besteht darin, daß je nach den herrschenden Lichtverhältnissen (Sonneneinstrahlung) die Bildschirmanzeige nur schwer zu erkennen ist.

Schließlich ist eine derartige relativ komplexe Vorrichtung erklärungs- und gewöhnungsbedürftig und schreckt sicher viele Kunden ab.

Aufgabe der Erfindung ist es daher, eine möglichst einfache Vorrichtung zum Aufgeben von Bestellungen durch Kunden zu schaffen, das die oben geschilderten Nachteile vermeidet.

Diese Aufgabe wird erfindungsgemäß dadurch gelöst, daß die Vorrichtung als Lesegerät für Karten ausgebildet ist, wobei jeder möglichen Bestellung eine mit dem Lesegerät lesbare Karte zugeordnet ist.

Diese Vorrichtung ist insofern vorteilhaft, als sie intuitiv zu bedienen ist und somit ohne Vorkenntnisse sofort benutzbar ist. Der Kunde muß nur aus den vorhandenen Karten, von denen eine jede die Darstellung oder Beschreibung einer möglichen Bestellung (und in der Regel deren Preis) enthält, die gewünschte Bestellung zusammenstellen und anschließend jede der ausgewählten Karten einmal (falls der Artikel einmal gewünscht wird) oder mehrmals (falls der Artikel mehrfach gewünscht wird) in den Schlitz des Lesegerätes stecken. Die Karten erfüllen somit die Funktion einer Speisekarte in einem Restaurant bzw. eines Warenkataloges, aus dem die möglichen Bestellungen ersichtlich sind. Die Vorrichtung kann an eine normale Kassenanlage angeschlossen werden, die Bons ausdruckt, auf denen die jeweilige Bestellung der Bestellvorrichtung zugeordnet wird, mit der sie aufgegeben wurde.

Es wird kein Bildschirm benötigt und aufgrund des einfachen Aufbaus bedarf es nur einer geringen Standfläche. Darüber hinaus ist die Vorrichtung aufgrund ihres einfachen Aufbaus relativ wirtschaftlich herstellbar. Es ist ausreichend, wenn sich die Vorrichtung erst beim Einstecken einer Karte einschaltet, was den Stromverbrauch beachtlich reduziert.

Eine Ausbildung der Erfindung besteht darin, daß die Karten eine Darstellung und/oder Beschreibung der jeweiligen Bestellung und eine mit dem Lesegerät lesbare Codierung aufweist.

Eine Weiterbildung der Erfindung besteht darin, daß eine Karte zum Rufen der Bedienung vorgesehen ist, die eine mit dem Lesegerät lesbare Codierung aufweist.

Auf dieser Karte ist entweder eine Bedienung graphisch dargestellt oder das Wort "Bedienung" geschrieben. Wird diese Karte in das Lesegerät eingeschoben, wird im Servicebereich eine Bedienung gerufen.

Es liegt im Rahmen der Erfindung, daß die Codierung eine Loch-Codierung, ein Barcode oder eine auf einer Chipkarte oder einem RFID-Label gespeicherte Information ist.

Grundsätzlich ist jede beliebige Art von Codierungen einsetzbar.

Eine vorteilhafte Ausgestaltung der Vorrichtung besteht darin, daß eine optische oder akustische Anzeigevorrichtung zum Anzeigen einer erfolgten Übertragung der Bestellung an den Servicebereich vorgesehen ist.

Eine solche Anzeige dient zur Vermeidung von versehentlichen Doppelbestellungen, da der Kunde eine Rückmeldung über die erfolgte Bestellung erhält.

Weiterhin ist es zweckmäßig, daß eine optische oder akustische Anzeigevorrichtung zum Anzeigen einer Rückmeldung aus dem Servicebereich vorgesehen ist.

Mit einer solchen Anzeigevorrichtung kann beispielsweise über ein intelligentes Kassensystem, das die Lagerbestände miterfaßt, dem Kunden mitgeteilt werden, daß der bestellte Gegenstand nicht mehr vorrätig ist.

Eine bevorzugte Ausgestaltung der Erfindung besteht darin, daß die Vorrichtung eine Halterung für die Karten aufweist.
Dies ermöglicht eine platzsparende Unterbringung der Karten an der Bestellvorrichtung, so daß der Verbrauch an Stellfläche auf dem Tisch minimiert wird.

Es ist zur Erfindung gehörig, daß die Vorrichtung batteriebetrieben ist.

Da wie oben bereits dargelegt, der Stromverbrauch durch den Wegfall eines Bildschirms und die Einschaltung der Vorrichtung nur bei Einschieben einer Karte minimiert werden kann, ist die Vorrichtung auch mit herkömmlichen Batterien über einen längeren Zeitraum betreibbar, womit sie auch an Tischen ohne Stromanschluß in der Nähe, z.B. in Biergärten, verwendet werden kann.

Schließlich ist es vorteilhaft, daß Mittel zum Übermitteln einer Batteriewarnung an den Servicebereich vorgesehen sind.

Bei schwächer werdender Batterie kann die Vorrichtung beispielsweise eine Meldung an den Servicebereich übermitteln, die zum Ausdruck eines Bons führt, welcher auf das Erfordernis eines Batteriewechsels hinweist.

Weiterhin betrifft die Erfindung auch eine Karte für eine erfindungsgemäße Vorrichtung.

Diese Karten müssen eine ausreichende Steifigkeit aufweisen, um beim Einschieben in den Kartenleseschlitz nicht deformiert zu werden und können aus beliebigen Materialien bestehen, insbesondere aus Karton oder Kunststoff. Zudem können die Karten an dem unteren Ende auf einer Seite eine Aussparung aufweisen (bzw. an einen Vorsprung an der anderen Seite), um sicherzustellen, daß die Karte in der richtigen Richtung in den Kartenschlitz eingeschoben wurde. Nur bei richtigem Einschieben der Karte wird dann das Lesegerät durch das untere Ende der Karte eingeschaltet.

Nachfolgend wird ein Ausführungsbeispiel der Erfindung anhand von Zeichnungen näher erläutert.

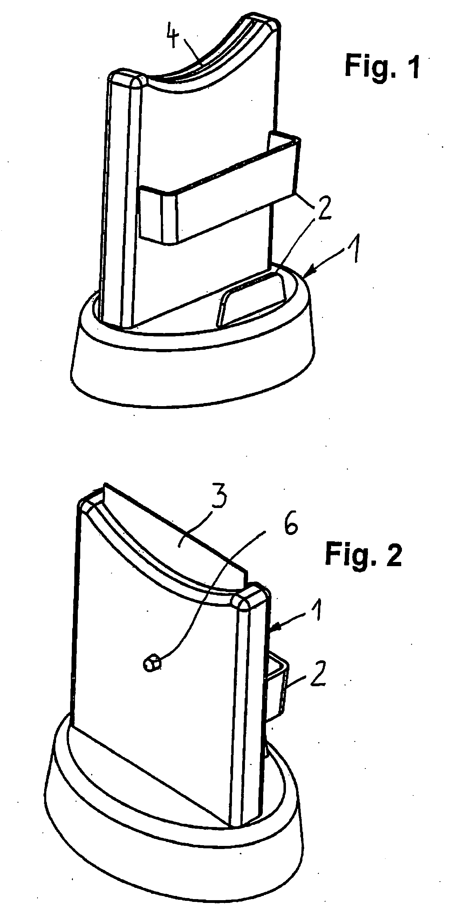

Es zeigen
- Fig. 1: eine erfindungsgemäße Vorrichtung in perspektivischer Darstellung schräg von hinten betrachtet (ohne eingesteckte Karte),
- Fig. 2: eine erfindungsgemäße Vorrichtung in perspektivischer Darstellung schräg vorne betrachtet (mit eingesteckter Karte),

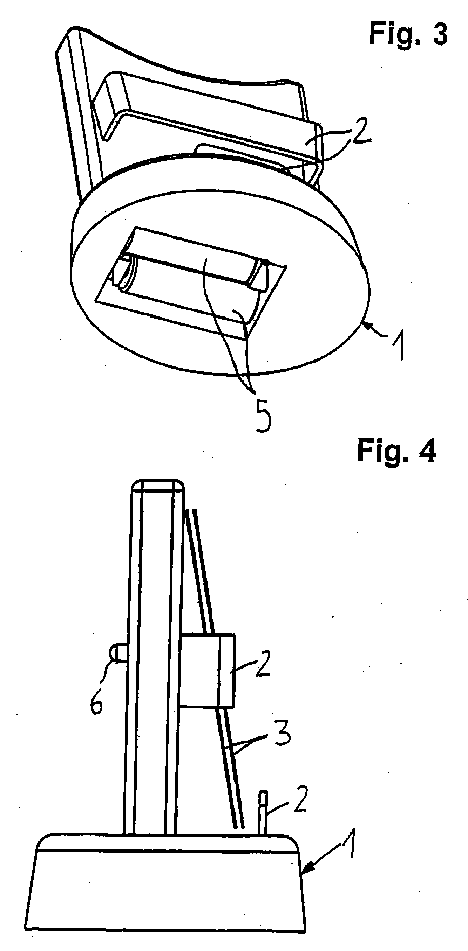

- Fig. 3: eine erfindungsgemäße Vorrichtung in perspektivischer Darstellung schräg von unten betrachtet,
- Fig. 4: eine erfindungsgemäße Vorrichtung in Seitenansicht (ohne eingesteckte Karte, mit zwei Karten im Halter),

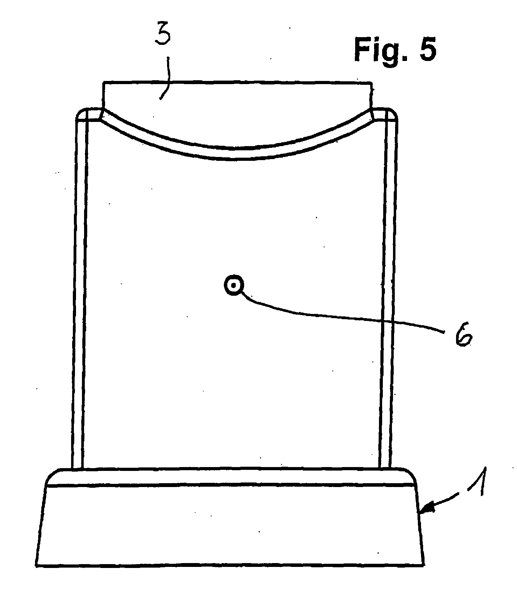

- Fig. 5: eine erfindungsgemäße Vorrichtung in Draufsicht,

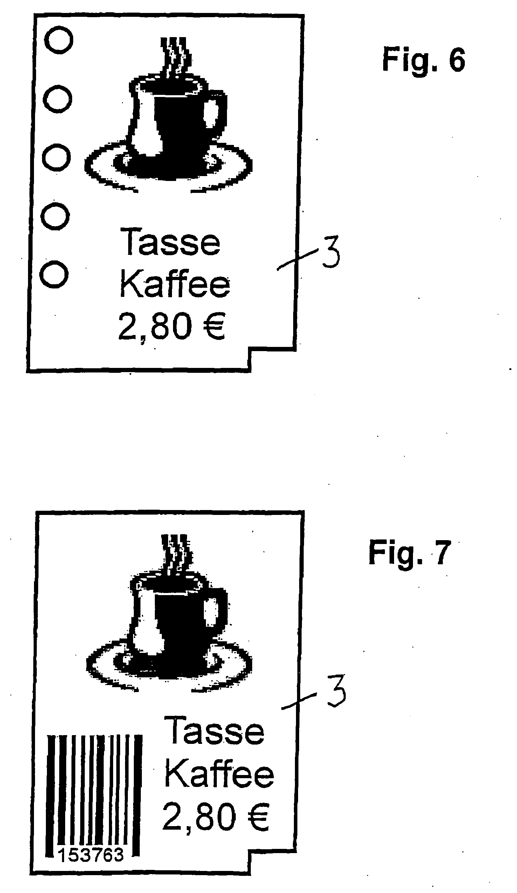

- Fig. 6 und Fig. 7: Karten für die erfindungsgemäße Vorrichtung mit Loch-Codierung und mit Barcode,

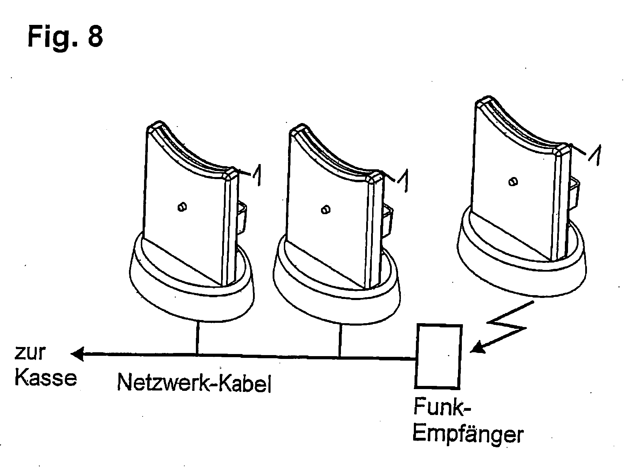

- Fig. 8: ein Netzwerk aus mehreren erfindungsgemäßen Vorrichtungen.

Die erfindungsgemäße Vorrichtung wird nachfolgend am Beispiel einer Verwendung in der Gastronomie beschrieben.

Auf jedem Tisch der Gaststätte oder des Restaurants steht eine erfindungsgemäße Vorrichtung 1.

In dem Halter 2 der Vorrichtung befinden sich Karten 3, auf denen die verschiedenen Artikel des Restaurantes (z.B. Bier, Cola, etc.) abgebildet und/oder beschrieben (und mit einer Preisangabe versehen) und mit einer Codierung versehen sind. Aus diesen Karten 3 wählt der Gast die gewünschten Speisen und Getränke aus, und steckt diese Karten 3 dann in den Kartenschlitz 4 der Vorrichtung, in dem ein Lesegerät angeordnet ist. Mit dem Lesegerät wird die Codierung gelesen und die Bestellung wird direkt an den Servicebereich übermittelt, ohne daß es weiterer Eingabe-Bestätigungen des Gastes bedürfte. Die Stromversorgung erfolgt mittels einer Batterie 5 (Akku).

Weiterhin ist eine optische Anzeigevorrichtung 6 zum Anzeigen einer erfolgten Übertragung der Bestellung an den Servicebereich vorgesehen, die zur Vermeidung von versehentlichen Doppelbestellungen dient.

Somit ist keine Eingabe von Zahlen, welche fehleranfällig ist, erforderlich. Die Auswahl der Speisen erfolgt durch Auswahl bebilderter und betexteter Karten 3, die die Funktion einer Speisekarte übernehmen. Die Übermittlung der Bestellung kann per Kabel oder kabellos per Funk oder Infrarot etc. erfolgen. Die eigentliche Abwicklung der Bestellung übernimmt danach eine gängige Kassenanlage. Es müssen somit keine Daten von der Kassenanlage in die Vorrichtung 1 geladen werden. (z.B. Speisekarte mit Preisen). Werbung (z.B. Bier- oder Weinwerbung) kann auf der Kartenrückseite angebracht werden. Damit ist eine Finanzierung der Karten 3 z.B. über eine Brauerei möglich. Die Karten 3 können auch beidseitig genutzt werden. Dann ist jedoch keine oder eine nur sehr kleine Werbefläche vorhanden. Über die Anzeigevorrichtung 6 an der Vorderseite der Vorrichtung 1 wird dem Kunden angezeigt, daß seine Bestellung erfaßt wurde und bearbeitet wird. Die Vorrichtung 1 schaltet sich erst beim Einstecken durch die Karte 3 in den Kartenschlitz 4 ein, was eine erhebliche Stromeinsparung und damit das Schonen der Batterie 5 zur Folge hat. Das Verwenden von Standard-Batterien erhöht die Wirtschaftlichkeit für den Gastronomen, da keine teueren Spezialbatterien gewechselt werden müssen.

Die Abwicklung einer Bestellung läuft wie nachfolgend geschildert ab.
- Karten 3 aus dem Halter 2 entnehmen
- Die Karte 3, die der gewünschten Speise bzw. dem gewünschten Getränk entspricht, aussuchen.
   Die Karte 3 in den Kartenschlitz 4 der Vorrichtung 1 stecken.
   Karte 3 wieder entnehmen.
- Es leuchtet ca. 1 sec. die Anzeigevorrichtung 6 auf, so daß der Gast eine visuelle Bestätigung seiner Bestellung hat. Wahlweise (je nach Bauart) kann auch ein Tonsignal oder eine Sprachmeldung erfolgen.
- Die Daten werden an eine Kassenanlage übermittelt und dort verarbeitet. Das heißt, daß beispielsweise ein Bon mit der Bestellung des Gastes ausgedruckt wird.
- Wird der Artikel ein weiteres Mal gewünscht, so steckt man die Karte 3 ein weiteres Mal in den Kartenschlitz 4.
- Karten 3 wieder in den Halter 2 zurückstellen.

Mit speziellen Karten 3 (spezielle Identifizierungs-Nummer) ist es möglich, statt der Aufgabe einer Bestellung auch eine Bedienung zu rufen (z.B. für die Rechnung).

Dazu wird die entsprechend kodierte Karte 3 in den Kartenschlitz gesteckt. Der Vorgang ist der gleiche wie beim Bestellen. Hierbei muß nur die Kasse statt einen Bon zu drucken den Kellner anfordern (über Kellner-Ruf oder Klingel).

Die Vorrichtungen 1 lassen sich per Kabel oder vorzugsweise drahtlos mit einander verbinden. Dabei kann die Verbindung mittels eines einfachen Kabels (z.B. 2-adriges Klingel-Kabel, KAT5-Netzwerk-Kabel) oder mittels Funk (DECT, Bluetooth, WLAN oder ähnlichen Verfahren) sowie auf Infrarot- oder Ultraschallübertragung zur Kasse aufgebaut werden.

Die Übertragung erfolgt vorzugsweise bidirektional. Dies ermöglicht es, sicherzustellen, daß die Kassenanlage die Bestellung erhalten hat. Dazu sendet die Kassenanlage nach dem Erhalt einer Bestellung eine Bestätigung an die Vorrichtung 1 zurück.

Um dem Gast diese Bestätigung anzuzeigen, leuchtet die Anzeigevorrichtung 5 kurz auf Alternativ kann auch ein Ton-Signal oder eine Sprachmeldung (z.B. "Wir haben Ihre Bestellung erhalten") erfolgen.

Um die vom Gast gewählte und eingesteckte Karte 3 in der Vorrichtung zu identifizieren, sind die Karten 3 mit einer Codierung versehen. Diese Codierung wird beim Einstecken der Karte 3 in den Kartenschlitz 4 an die Kassenanlage übermittelt. Ebenso übermittelt die Vorrichtung die in der Vorrichtung 1 gespeicherte Tisch-Nummer oder eine Terminal-ID-Nummer, welche in der Vorrichtung 1 per Schalter oder Programmierung des internen Speichers eingestellt werden kann. Damit sind alle wesentlichen Informationen zur Datenverarbeitung in der Kassenanlage vorhanden.

Die Aktivierung der Vorrichtung 1 erfolgt vorzugsweise durch einen Schalter im Kartenschlitz 4, vorzugsweise an dessen unterem Ende. Damit wird die Vorrichtung erst beim Einschieben einer Karte 3 in den Kartenschlitz 4 eingeschaltet und beginnt die Karte 3 über das Lesesystem auszulesen. Danach werden die Daten an die Kassenanlage übermittelt.

Es bestehen verschiedene Möglichkeiten, die Identifizierung des auf der Karte 3 angezeigten Artikels dem Terminal zu übermitteln. Beispielsweise ist es möglich, mittels Lochungen auf der Karte 3 die Artikel zu identifizieren. Je nachdem, welches Loch gestanzt oder nicht ausgestanzt wurde, kann ein Muster entstehen, welches sich von der Vorrichtung lesen läßt. Damit hat jeder Artikel ein eigenes Lochbild, welche zur Identifizierung dient.

Alternativ ist auch das Aufbringen eines Barcodes auf der Karte 3 möglich. Dieser Barcode enthält dann die Identifizierungs-Nummer.

Etwas aufwendiger ist die Verwendung von Chipkarten, welche einen Chip enthalten, der dann die entsprechende Identifizierungs-Nummer enthält.

Ebenso kann eine Karte 3 über RFID (Radio-Frequenz-Identifikation) von der Vorrichtung 1 gelesen werden. Auch diese Kartentypen enthalten einen Chip, der die Identifizierungs-Nummer enthält.

Rechtzeitig vor dem Leerwerden der Batterie 5 kann die Vorrichtung 1 eine Batterie-Warnung mit der nächsten Bestellung an die Kasse mitsenden. Der Gastronom kann dann an der betroffenen Vorrichtung 1 die Batterie 5 rechtzeitig tauschen, bevor die Vorrichtung 1 funktionsunfähig wird.

Es ist vorteilhaft, wenn eine optische oder akustische Anzeigevorrichtung zum Anzeigen einer Rückmeldung aus dem Servicebereich vorgesehen ist, um beispielsweise dem Kunden mitzuteilen, daß der bestellte Gegenstand nicht mehr vorrätig ist.

Wird eine intelligente Kassenanlage angeschlossen, so ist es sogar möglich, bei einer Bestellung eine Rückmeldung der Kasse per Sprache auszugeben. Ist z.B. ein Artikel nicht mehr vorhanden (z.B. bei einer Bestellung eines bestimmten Fischgerichtes, wobei dieser Fisch nicht mehr vorrätig ist), so kann die Kasse statt einer Buchungsbestätigung eine Fehlermeldung senden, was dazu führt, daß in der Vorrichtung eine andere Sprachmeldung ertönt (z.B. "Ihre Bestellung ist nicht mehr erhältlich").

Die Karten 3 können eine seitliche Aussparung besitzen, damit verhindert wird, daß die Karten 3 verkehrt herum eingesteckt werden. Im Kartenschlitz 4 verhindert eine Sperre, daß eine verkehrt herum eingesteckte Karte 3 bis zum unteren Ende in den Kartenschlitz 4 eingeschoben werden kann. Damit wird die Vorrichtung 1 nicht eingeschaltet, wenn eine Karte 3 verkehrt eingelegt wurde.

Die Anwendung der Vorrichtung 1 ist nicht alleine auf die Gastronomie beschränkt; sie kann überall dort zum Einsatz gebracht werden, wo Gäste bzw. Kunden selbstständig eine Bestellung abgeben können.

## Patentansprüche

1. Vorrichtung (1) zum Aufgeben von Bestellungen durch Kunden, insbesondere von Speisen und Getränken am Tisch eines Restaurants, mit Mitteln zum Übertragen der Bestellung an den Servicebereich, **dadurch gekennzeichnet, daß** die Vorrichtung (1) als Lesegerät für Karten (3) ausgebildet ist, wobei jeder möglichen Bestellung eine mit dem Lesegerät lesbare Karte (3) zugeordnet ist.

2. Vorrichtung gemäß Anspruch 1, **dadurch gekennzeichnet, daß** die Karten (3) eine Darstellung und/oder Beschreibung der jeweiligen Bestellung und eine mit dem Lesegerät lesbare Codierung aufweist.

3. Vorrichtung gemäß Anspruch 1, **dadurch gekennzeichnet, daß** eine Karte (3) zum Rufen der Bedienung vorgesehen ist, die eine mit dem Lesegerät lesbare Codierung aufweist.

4. Vorrichtung gemäß Anspruch 2 oder 3, **dadurch gekennzeichnet, daß** die Codierung eine Loch-Codierung, ein Barcode oder eine auf einer Chipkarte oder einem RFID-Label gespeicherte Information ist.

5. Vorrichtung gemäß Anspruch 1, **dadurch gekennzeichnet, daß** eine optische oder akustische Anzeigevorrichtung (6) zum Anzeigen einer erfolgten Übertragung der Bestellung an den Servicebereich vorgesehen ist.

6. Vorrichtung gemäß Anspruch 1, **dadurch gekennzeichnet, daß** eine optische oder akustische Anzeigevorrichtung zum Anzeigen einer Rückmeldung aus dem Servicebereich vorgesehen ist.

7. Vorrichtung gemäß Anspruch 1, **dadurch gekennzeichnet, daß** die Vorrichtung (1) einen Halter (2) für die Karten (3) aufweist.

8. Vorrichtung gemäß Anspruch 1, **dadurch gekennzeichnet, daß** die Vorrichtung (1) batteriebetrieben ist.

9. Vorrichtung gemäß Anspruch 8, **dadurch gekennzeichnet, daß** Mittel zum Übermitteln einer Batteriewarnung an den Servicebereich vorgesehen sind.

10. Karte für eine Vorrichtung gemäß den Ansprüchen 1 bis 9.
